Europäisches Patentamt

European Patent Office

Office européen des brevets

(19)

(11) Numéro de publication: **0 051 523**
A1

## (12) DEMANDE DE BREVET EUROPEEN

(21) Numéro de dépôt: 81401675.4

(22) Date de dépôt: 23.10.81

(51) Int. Cl.³: **B 65 D 39/00**
C 08 J 9/10, C 08 J 3/22
//C08L23/08

(30) Priorité: 10.11.80 FR 8024007

(43) Date de publication de la demande:
12.05.82 Bulletin 82/19

(84) Etats contractants désignés:
AT BE CH DE GB IT LI LU NL SE

(71) Demandeur: PUPI-MATIC S.A. Société dite:
Zône industielle de Oiry
F-51200 Epernay(FR)

(72) Inventeur: Paniez, Jean-Marie, Joseph
Chemin de la Barbière aux bosses
F-51200 Epernay(FR)

(74) Mandataire: Gerardin, Robert Jean René
Cabinet Robert Gerardin 2, rue Gambetta
F-51200 Epernay(FR)

(54) Bouchons en matière plastique cellulaire.

(57) La matière cellulaire employée est obtenue à partir de la combinaison d'un copolymère d'éthylène et d'une faible proportion d'acétate de vinyle et d'une certaine proportion d'un mélange maître moussant et de deux mélanges maîtres colorants contenant chacun un pigment de nature différente.

Ces bouchons sont destinés à l'obturation, sans altération, de récipients à goulot contenant un produit comestible.

EP 0 051 523 A1

Croydon Printing Company Ltd

- I -

## Bouchons en matière plastique cellulaire

La présente invention concerne les bouchons en matière plastique cellulaire destinés à obturer les récipients à goulot contenant des produits comestibles et en particulier, des liquides tels que le vin, les boissons pétillantes, l'huile, le vinaigre, etc.

L'utilisation de matières plastiques cellulaires pour la fabrication de bouchons destinés à remplacer le traditionnel bouchon de liège, pour l'obturation de récipients à goulot, tels que les bouteilles ou les bonbonnes contenant des liquides comestibles, est connue depuis assez longtemps. De telles réalisations ont été décrites dans les brevets français I.230.944 du 23 Juillet 1959, 2.349.508 du 2I Avril I972, 2.284.534 du I2 Septembre I974 et 2.4I9.8II du I5 Mars I978.

Les mélanges employés pour obtenir une structure en matière plastique cellulaire utilisable pour fabriquer les bouchons de bouteilles ne permettaient pas, jusqu'alors, d'obtenir des caractéristiques mécaniques correspondant à celles du bouchon de liège, et ne répondaient pas toujours à la réglementation imposée pour le conditionnement de produits alimentaires et aux exigences de neutralité gustative exigées par les consommateurs; en particulier, dans le domaine des vins fins et des alcools..

Pour pallier ces difficultés, diverses solutions ont été imaginées et parfois réalisées. Parmi celles-ci, on peut citer :
- l'incorporation de particules de liège à la matière plastique cellulaire en vue d'obtenir une souplesse aussi voisine que possible de celle du liège : brevets français N° I.349.033 du 5 Mars I963 et 73.44990 du I7 Décembre I973.
- revêtement de cire d'abeilles ou d'un mélange de cire d'abeilles et de paraffine, pour réduire le coefficient de frottement, accroître l'étanchéité et éliminer tout contact direct avec le produit alimentaire : Brevet français N° 2.4I9.8II du IO Mars

- 2 -

1978.

- incorporation de dioxyde de soufre et d'eau permettant au dioxyde de soufre d'agir comme fixateur d'oxygène afin d'éviter l'altération du vin par infiltration d'air entre le bouchon et le goulot de la bouteille : brevet français N° 2.349.508 du 2I Avril I977.

La situation se complique lorsqu'on cherche à boucher des bouteilles de liquides gazeux ou pétillants tels que le champagne, par exemple, en utilisant des bouchons en matière plastique cellulaire. En effet, le bouchon doit résister à la force d'éjection due à la pression des gaz et exercer contre le goulot de la bouteille, une pression telle que toute infiltration de liquide ou de gaz vers l'extérieur de la bouteille soit impossible. Ce bouchon doit néanmoins pouvoir être mis en place en utilisant les mêmes moyens que pour le bouchage avec des bouchons de liège et être absolument neutre au goût.

La présente invention permet de remédier aux inconvénients précédemment cités tout en offrant des avantages supplémentaires.

Avec celle-ci, en effet :

- le bouchage peut s'effectuer en utilisant les moyens déjà employés avec les bouchons en liège.
- la souplesse obtenue est très voisine de celle du liège.
- les réglementations imposées en matière de conditionnement de produits alimentaires sont très largement respectées.
- le goût du produit alimentaire contenu dans le récipient ne subit aucune altération; contrairement à ce qui se produit très souvent avec les bouchons en liège.
- la pression exercée sur les parois du goulot par la matière plastique cellulaire, est au moins égale à celle du liège et elle se conserve dans le temps.
- le coefficient de frottement entre le bouchon et le goulot de la bouteille est voisin de celui obtenu avec les bouchons en liège : ce qui permet aux bouchons, objet de l'invention, de se comporter comme les bouchons de liège, notamment avec les boissons gazeuses et pétillantes (champagne, vins mousseux, cidre, etc...).

- l'élasticité du matériau est conservée dans le temps, même lors de stockage de longue durée; ce qui élimine tout risque de fuite de gaz ou de liquide, ou d'introduction d'air et présente un intérêt tout particulier avec les boissons pétillantes telles que les vins mousseux ou le champagne.

- la couleur et l'aspect extérieur de ces bouchons sont semblables à ceux des bouchons en liège.

- l'extraction des bouchons s'effectue de la même façon, avec les mêmes moyens et la même facilité qu'avec les bouchons de liège, avec un comportement identique d'un bouchon à l'autre.

- tout risque de rupture des bouchons ou de chute de particules de matière à l'intérieur du récipient au moment du débouchage, est exclu.

- les caractéristiques physiques, chimiques et mécaniques sont absolument identiques d'un bouchon à l'autre.

- la matière plastique cellulaire étant entièrement enveloppée d'une peau élastique lisse, absolument hermétique, aucune pollution par infiltration, notamment bactérienne, n'est possible; ce qui rend quasi inutile la stérilisation préalable au bouchage qui doit, par contre, être effectuée impérativement avec les bouchons en liège.

- aucune infiltration de liquide à l'intérieur des bouchons n'est possible; contrairement à ce qui se produit souvent avec les bouchons en liège, avec, pour conséquence, la communication d'un "goût de bouchon" aux boissons..

Les bouchons, objet de l'invention, se caractérisent principalement en ce qu'ils sont réalisés dans une matière plastique cellulaire obtenue à partir de la combinaison d'un copolymère d'éthylène et d'une très faible proportion d'acétate de vinyle de basse cristallinité, d'un mélange maître moussant constitué d'un copolymère d'éthylène et d'acétate de vinyle haute fluidité additionné d'un agent gonflant accompagné d'oxyde de zinc et d'hydroxyde de magnésium et d'une très faible proportion de mélanges maîtres colorants composés de polyéthylène basse densité, d'oxyde de titane, d'oxyde de fer, de noir de carbone, d'un agent anti-oxydant et d'un pigment jaune de nature différente selon le mélange.

D'autres caractéristiques et avantages apparaîtront dans la description qui va suivre de la constitution d'un bouchon donnée à titre d'exemple non limitatif.

Un tel bouchon est réalisé généralement par injection à chaud, sous pression, par l'intermédiaire d'une buse à obturation, dans un moule pourvu d'au moins une cavité dont la forme et les dimensions correspondent à celles du bouchon que l'on désire obtenir, d'un mélange composé :

– d'une combinaison de base, obtenue à partir d'un copolymère d'éthylène et de 9 à I2 % d'acétate de vinyle de basse cristallinité.

– de 3 à 6 % d'un mélange maître moussant constitué d'un copolymère d'éthylène et d'acétate de vinyle haute fluidité, d'azodicarbonamide (agent gonflant), d'oxyde de zinc et d'hydroxyde de magnésium.

– de moins de 0,5 % de chacun de deux mélanges maîtres colorants composés de polyéthylène basse densité, d'oxyde de titane, d'oxyde de fer, de noir de carbone, d'un agent anti-oxydant et respectivement de diarylide-dimetoxy-chloroanilide et de calcium lake mono-azo (pigments jaunes).

En se reportant à la description ci-dessus, on constate :
– que la combinaison de base (copolymère d'éthylène et d'acétate de vinyle) ne contient aucun additif.
– que le système moussant est incorporé à un mélange maître séparé.

Ceci permet, en jouant sur la proportion d'acétate de vinyle de basse cristallinité contenue dans la combinaison de base, et sur la proportion de mélange maître moussant, d'obtenir une structure cellulaire fine et régulière convenant particulièrement bien à la réalisation de bouchons.

Une proportion de 9 à 12 % d'acétate de vinyle basse cristallinité dans la combinaison de base et de 3 à 6 % de mélange maître moussant, dont la composition a été donnée plus haut, permet d'obtenir des caractéristiques mécaniques tout à fait comparables à celles des bouchons en liège.

La proportion de 3 à 6 % de mélange maître moussant permet de réduire la teneur en azodicarbonamide (agent gonflant) à une valeur très inférieure à celle tolérée par la réglementation pour les joints d'étanchéité en contact avec les aliments.

L'adjonction d'oxyde de zinc et d'hydroxyde de magnésium au mélange maître moussant, active la décomposition en gaz de l'azodicarbonamide et permet d'obtenir cette décomposition vers 170 ° C..

La production normale de gaz, qui est de 220 à 230 ml/g, est fonction du chauffage, du milieu dans lequel la décomposition de l'azodicarbonamide s'effectue et de la granulométrie.

L'adjonction de moins de 0,5 % de chacun des deux mélanges maîtres colorants, précédemment définis, permet à la fois de conserver au bouchon sa qualité alimentaire et d'obtenir une coloration et un aspect veiné très voisin de ceux du bouchon en liège.

Lors du moulage, la solidification rapide de la matière chaude provoque, au contact des parois du moule, une couche exempte de porosité dont l'épaisseur varie avec la vitesse, la pression

- 6 -

d'injection, la température de refroidissement, ainsi qu'avec la configuration et le mode d'alimentation du moule.

Comme on le voit, les caractéristiques mécaniques du bouchon et la durée du cycle de moulage, sont directement fonction du mélange utilisé et des moyens de production.

Les bouchons, objet de l'invention, peuvent être utilisés dans tous les cas où des denrées alimentaires doivent être conditionnées dans des récipients rigides à goulot.

Des applications intéressantes existent dans le domaine du conditionnement des denrées alimentaires liquides et notamment dans celui des boissons, tout particulièrement des boissons pétillantes telles que les vins mousseux, le champagne, etc....

Revendications

I. Bouchons en matière plastique cellulaire obtenue à partir de la combinaison d'un copolymère d'éthylène et d'acétate de vinyle et d'un mélange maître moussant, dont la couleur et l'aspect sont obtenus par addition de deux autres mélanges maîtres à base de polyéthylène basse densité additionné de colorants et d'un agent anti-oxydant, caractérisés en ce que la combinaison de base contient une très faible proportion d'acétate de vinyle de basse cristallinité, en ce que le mélange maître moussant est constitué d'un copolymère d'éthylène, d'acétate de vinyle haute fluidité et d'un agent gonflant accompagné d'oxyde de zinc et d'hydroxyde de magnésium, en ce que les deux mélanges maîtres colorants sont composés de polyéthylène basse densité, d'oxyde de titane, d'oxyde de fer, de noir de carbone, d'un agent anti-oxydant et d'un pigment jaune de nature différente selon le mélange.

2. Bouchons en matière plastique cellulaire, selon la revendication I, caractérisés en ce que la proportion d'acétate de vinyle contenue dans la combinaison de base est comprise entre 9 et I2 %.

3. Bouchons en matière plastique cellulaire, selon la revendication I, caractérisés en ce que la proportion de mélange maître moussant utilisée est comprise entre 3 et 6 %.

4. Bouchons en matière plastique cellulaire, selon les revendications I et 3, caractérisés en ce que l'agent gonflant entrant dans la composition du mélange maître moussant est de l'azodicarbonamide.

5. Bouchons en matière plastique cellulaire, selon la revendication I, caractérisés en ce que la proportion de chacun des mélanges maîtres colorants utilisés est inférieure à 0,5 %.

6. Bouchons en matière plastique cellulaire, selon les revendications I et 5, caractérisés en ce que les pigments jaunes entrant dans la composition de chacun des deux mélanges maîtres colorants sont respectivement du diarylide-dimetoxy-chloroanilide et du calcium lake mono-azo.

0051523

**Office européen des brevets**

**RAPPORT DE RECHERCHE EUROPEENNE**

Numero de la demande
EP 81 40 1675

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernee | |
| A | FR - A - 2 447 867 (METAL BOX) (publié le 29 août 1980) <br> * Revendications 1,2 * | 1,2 | B 65 D 39/00 <br> C 08 J 9/10 <br> 3/22// <br> C 08 L 23/08 |
| | -- | | |
| AD | FR - A - 2 149 811 (SHAW PLASTICS) <br> * Revendication 1; page 2, lignes 30-37; exemple 1 * | 1 | |
| | -- | | |
| A | CHEMICAL ABSTRACTS, vol. 79, no. 18, 5 novembre 1973, page 29, résumé 105958c Columbus, Ohio, US <br> & JP - A - 73 45579 (SUMITOMO BAKELITE) (29 juin 1973) <br> * Résumé en entier * | 1,2,4 | DOMAINES TECHNIQUES RECHERCHES (Int. Cl. 3) <br><br> B 65 D 39/00 <br> C 08 J 9/10 <br> 9/06 <br> 9/00 <br> 3/22 |
| | -- | | |
| A | EP - A - 0 011 748 (DYNAMIT NOBEL) | | |
| A | FR - A - 1 505 030 (PHILLIPS PETROLEUM | | |
| A | DE - A - 1 719 306 (VEB LEUNA-WERKE) | | |
| | ----- | | CATEGORIE DES DOCUMENTS CITES |

X: particulièrement pertinent à lui seul
Y: particulièrement pertinent en combinaison avec un autre document de la même catégorie
A: arrière-plan technologique
O: divulgation non-ecrite
P: document intercalaire
T: théorie ou principe à la base de l'invention
E: document de brevet anterieur, mais publié à la date de dépôt ou apres cette date
D: cite dans la demande
L: cité pour d'autres raisons

&: membre de la même famille, document correspondant

Le present rapport de recherche a été établi pour toutes les revendications

| Lieu de la recherche | Date d'achevement de la recherche | Examinateur |
|---|---|---|
| La Haye | 11-01-1982 | HALLEMEESCH |

OEB Form 1503.1  06.78